# EUROPEAN PATENT APPLICATION

(11) **EP 4 286 503 A1**
(43) Date of publication of application: **06.12.2023**
(21) Application number: 22745604.3
(22) Date of filing: 14.01.2022
(51) Int. Cl.: C12G 3/04

(54) **FRUIT JUICE-CONTAINING UNDILUTED SAKE**

(30) Priority: 29.01.2021 JP 2021012963
(71) Applicant: Suntory Holdings Limited, Osaka 530-8203 (JP)
(72) Inventor: UEHARA, Ruri, Kawasaki-shi, Kanagawa 211-0067 (JP); ITO, Yu, Kawasaki-shi, Kanagawa 211-0067 (JP); YONEZAWA, Chie, Kawasaki-shi, Kanagawa 211-0067 (JP); SEIKI, Hiroshi, Kawasaki-shi, Kanagawa 211-0067 (JP)
(74) Representative: Vossius & Partner Patentanwälte Rechtsanwälte mbB
(86) International application number: PCT/JP2022/001058
(87) International publication number: WO 2022/163379

(57) **Abstract**

An object of the present invention is to provide a fruit juice-containing unrefined liquor and a fruit juice-containing alcoholic beverage which have a fresh and bright aroma of a freshly squeezed citrus fruit juice.

A method for producing a fruit juice-containing unrefined liquor provided by the present invention comprises the steps of: (a) mixing a fruit juice obtained from a citrus fruit using a juice extractor with an alcohol within 30 hours after squeezing, to obtain a mixed liquor with an alcohol content of from 15 to 55 v/v%; and (b) storing the mixed liquid in an environment at or below 0°C.

## Description

### TECHNICAL FIELD

The present invention relates to a fruit juice-containing unrefined liquor that retains a fresh aroma of a citrus fruit juice.

### BACKGROUND ART

In general, packaged alcoholic beverages are rarely consumed immediately after production, and are commonly stored in the distribution channel or the market for a certain period of time. For example, alcoholic beverages with a low alcohol content (RTD (ready to drink) beverages) may remain on the market for a long period of time after they are produced until they are purchased by consumers. Further, liqueurs with a high alcohol content are often consumed little by little as a base material for cocktails, and thus are stored at room temperature for a long period of time after they are purchased and opened until they are all used up -- therefore, the storage period of such liqueurs after production, including the time-on-market until they are sold, tends to become extremely long.

Many commercially available packaged alcoholic beverages are characterized by their fruity flavor. Thus, efforts have been made to enhance the fruity flavor of beverages by addition of a fruit juice (PTLs 1 to 3).

### CITATION LIST

### PATENT LITERATURES

PTL 1: International Patent Publication No. WO 2009/017115
PTL 2: International Patent Publication No. WO 2009/104660
PTL 3: International Patent Publication No. WO 2012/147465

### SUMMARY OF INVENTION

### TECHNICAL PROBLEM

Packaged alcoholic beverages may be faced with the problem of quality deterioration caused by fruit juice components if the storage period after production until consumption is prolonged. In other words, such beverages may deteriorate in product appearance due to sedimentation, or may develop off-flavors or lose their taste due to heat deterioration of fruit juice components, thus resulting in a decline of their commercial value.

For fruit juice-containing alcoholic beverages, it is important to retain a pronouncedly fresh aroma of a fruit juice and to enhance the quality stability. In particular, citrus fruit juices are more likely to lose their fresh and bright aroma as time goes on. Thus, with regard to packaged alcoholic beverages, there has been a desire to establish a technique of producing a fruit juice-containing unrefined liquor having a fresh aroma of a freshly squeezed citrus fruit juice.

In view of these circumstances, an object of the present invention is to provide a fruit juice-containing unrefined liquor and a fruit juice-containing alcoholic beverage which have a fresh and bright aroma of a freshly squeezed citrus fruit juice.

### SOLUTION TO PROBLEM

The present inventors have made intensive studies to achieve the aforementioned object, and as a result, found that when a citrus fruit juice and an alcohol (ethanol) are mixed and then frozen, an unrefined liquor having a fresh and rich aroma of a citrus fruit juice can be obtained. Thus, the inventors have completed the present invention.

More specifically, the present invention includes, but is not limited to, the following embodiments.
[1] A method for producing a fruit juice-containing unrefined liquor, the method comprising the steps of:
   mixing a fruit juice obtained from a citrus fruit using a juice extractor with an alcohol within 30 hours after squeezing, to obtain a mixed liquor with an alcohol content of from 15 to 55 v/v%;
   storing the mixed liquid in an environment at or below 0°C.
[2] The method as set forth in [1], wherein the fruit juice is mixed with an alcohol with an alcohol content of not less than 59 v/v%.
[3] The method as set forth in [1] or [2], wherein the mixed liquid is stored in an environment at or below 0°C for a period of not less than 24 hours.
[4] The method as set forth in any of [1] to [3], wherein the citrus fruit comprises at least one selected from the group consisting of lemon, grapefruit, orange, and lime.
[5] The method as set forth in any of [1] to [4], wherein the fruit juice-containing unrefined liquor is produced without taking a heating step.
[6] The method as set forth in any of [1] to [5], wherein the fruit juice-containing unrefined liquor has a fruit juice content of not less than 35% in terms of straight fruit juice.
[7] A fruit juice-containing unrefined liquor obtained by the method as set forth in any of [1] to [6].
[8] A method for producing a food or beverage, the method comprising adding a fruit juice-containing unrefined liquor obtained by the method as set forth in any of [1] to [6] to the food or beverage.
[9] A food or beverage having added thereto a fruit juice-containing unrefined liquor obtained by the method as set forth in any of [1] to [6].
[10] A method for enhancing the aroma of a food or beverage, the method comprising adding a fruit juice-containing unrefined liquor obtained by the method as set forth in any of [1] to [6] to the food or beverage.

### ADVANTAGEOUS EFFECTS OF INVENTION

According to the present invention, an alcoholic beverage having a fresh and bright aroma of a freshly squeezed citrus fruit juice can be produced.

### DESCRIPTION OF EMBODIMENTS

### Fruit juice-containing unrefined liquor

In one embodiment, the present invention is directed to an unrefined liquor containing a citrus fruit juice. The fruit juice-containing unrefined liquor of this invention is obtained by mixing and freezing a citrus fruit juice and an alcohol. To be specific, the fruit juice-containing unrefined liquor of this invention is produced by mixing a citrus fruit juice with an alcohol so as to give an alcohol content of from 15 to 55 v/v% and then storing the mixed liquid in an environment at or below 0°C.

The fruit juice-containing unrefined liquor of the present invention contains a citrus fruit juice. Any type of citrus fruit juice can be used without any limitation as long as it can be used for the production of beverages. The type of a citrus fruit used as a source material for a fruit juice is not particularly limited, and can be freely selected depending on the desired design quality of an alcohol beverage. As the citrus fruit, for example, orange, *Citrus unshiu,* lemon, grapefruit, lime, mandarin orange, *Citrus junos,* tangerine orange, temple tangor, tangelo, calamondin, or the like can be advantageously used, with at least one selected from the group consisting of lemon, grapefruit, orange, and lime being preferably used.

In the present invention, the method for squeezing a fruit juice is not particularly limited -- squeezing can be done by a known method. In this invention, for example, an inline juice extractor, a belt press juice extractor, a screw press juice extractor, a centrifugal juice extractor, or the like can be advantageously used. In this invention, the citrus fruit juice is preferably obtained by squeezing together the peel and pulp of a fruit -- for example, preferably by using a polycitrus juice extractor or a polyfruit juice extractor.

The form of the citrus fruit juice is not particularly limited -- for example, any of an unconcentrated, straight fruit juice, a concentrated fruit juice, a fruit purée, a clear fruit juice, a cloudy fruit juice, a semi-cloudy fruit juice, and the like can be used. In the present invention, an untreated fruit juice may be used, or a fruit juice treated by separation of insoluble solids, concentration, purification, dilution, heating, and/or the like may be used. Concentration may be performed by any method, such as vacuum concentration, freeze concentration, or reverse osmosis membrane concentration. Also, an enzymatically treated fruit juice can be advantageously used. From the viewpoint of the prevention of sedimentation of insolubles during long-term storage, it is preferable to use a clear fruit juice or other similar fruit juices treated by separating insoluble solids through filtration or the like. In this invention, a mixture of a plurality of fruit juices may also be used. The fruit juice used in this invention preferably has a refractive index value (Brix value) of from 6 to 70 as measured by a sugar refractometer.

The type of an alcohol (ethanol) used in the fruit juice-containing unrefined liquor of the present invention is not particularly limited, and any types of alcohols commonly used in beverages (i.e., liquors, in general terms) can be used without any limitation. The source material(s) for liquors, their production method, or other treatment methods are not limited in any way.

The alcohol content of an alcohol is preferably not less than 59 v/v%, more preferably not less than 70 v/v%, still more preferably not less than 80 v/v%, because such an alcohol content is advantageous for retaining aroma components of a citrus fruit. The upper limit of alcohol content is not particularly limited, but can be set to not more than 96 v/v% in consideration of the facts that alcohols obtained by distillation generally have an alcohol content of not more than 96 v/v%, and that alcoholic beverages made with pure ethyl alcohol are likely to lack aroma. As described later, in this invention, a citrus fruit juice and an alcohol are mixed together so as to obtain a mixed liquid with an alcohol content of from 15 to 55 v/v%. Therefore, it is preferable to use at least one alcohol with a high alcohol content.

With regard to the type of alcohol, a brewer's alcohol, for example, may be used. A single type of alcohol may be used, or two or more types of alcohols may be used. For example, brewages such as refined sake, wine, and beer, or distilled liquors such as whiskey, vodka, rum, shochu, and spirits can be advantageously used in the present invention. From the viewpoint of long-term stability, it is more preferable to use a distilled liquor. Among distilled liquors, a continuously distilled alcohol obtained by distilling an alcohol-containing substance in a continuous still can be advantageously used. Examples of such continuously distilled alcohols include, but are not limited to, feedstock alcohols and continuously distilled shochu (so-called "Ko-type shochu").

In the present invention, alcohol content can be measured according to the method stipulated in the Official Analysis Method of the National Tax Agency in Japan (National Tax Agency Directive No. 6 in 2007, revised on June 22, 2007). To be specific, an alcohol solution of interest is filtered or sonicated, if necessary, to remove carbon dioxide gas, and the CO₂-free sample is distilled under direct fire. Then, the resulting distillate is measured using a vibrating densimeter for its density at 15°C, which can be converted to an alcohol content according to the annex to the aforementioned Official Analysis Method of the National Tax Agency of Japan, which is titled "Table 2. Conversion between Alcohol Content and Density (15°C) or Specific Gravity (15/15°C)".

The fruit juice-containing unrefined liquor may have added thereto a flavoring, a saccharide, an acidulant, or the like to the extent that such components do not impair the effects of the present invention.

In the present invention, a citrus fruit juice and an alcohol are mixed together within 30 hours after squeezing, so as to give an alcohol content of from 15 to 55 v/v%. In this invention, the citrus fruit juice is preferably mixed with an alcohol within 28 hours after squeezing, more preferably within 24 hours or within 12 hours after squeezing. During the process of mixing a fruit juice and an alcohol, whichever of the fruit juice and the alcohol may be first introduced -- the order of introduction can be determined in consideration of the ease of operation. When mixing source materials, stirring is preferably performed such that the materials are homogeneously mixed as much as possible. The stirring can be performed using a well-known stirring means -- mechanical stirring or air stirring can be performed without any particular limitation.

In the present invention, a mixture of a citrus fruit juice and an alcohol has an alcohol content of from 15 to 55 v/v%, preferably from 15 to 40 v/v%, more preferably from 15 to 35 v/v%. When the mixture has an alcohol content within the aforementioned range, an unrefined liquor obtained can fully retain a fresh aroma of a citrus fruit juice and have excellent stability during long-term storage. In this invention, the mixing ratio of a citrus fruit juice and an alcohol is not particularly limited. However, the alcohol content of the mixture may be, if necessary, adjusted to be within the specified range with addition of water. The alcohol content of the mixture of a citrus fruit juice and an alcohol may also be set to not less than 20 v/v% or not less than 25 v/v%.

In the present invention, although the alcohol content of the mixture should be adjusted to be within the aforementioned range, the fruit juice concentration of the mixture is not particularly limited. However, when the fruit juice content of the mixture is adjusted to be within a specified range, the final product, i.e., packaged alcoholic beverage, can be rich in flavor. The fruit juice concentration of the mixture can be expressed as a relative concentration in terms of straight fruit juice, with respect to the fruit juice concentration of a straight fruit juice which is taken as 100%. For example, the concentration factor of a fruit juice used is calculated based on the Brix value of a straight fruit juice, and the calculated concentration factor and the mixing percentage of an alcohol can be used to calculate a fruit juice concentration. The fruit juice concentration of the mixture is preferably not less than 4%, more preferably not less than 10%, still more preferably not less than 35%.

The Brix value of the mixture can be measured using a known means -- for example, measured by a sugar refractometer (also called Brix meter). When the Brix value is so high that it exceeds the measurement range of a sugar refractometer, the mixture is diluted with an appropriate amount of pure water and then measured for Brix value, and the measured value is divided by a dilution factor to determine the Brix value of the mixture. As referred to above, the dilution factor is expressed as a volume ratio (v/v%) of the mixture to pure water.

In the present invention, a mixture of a fruit juice and an alcohol obtained in the aforementioned manner is stored in an environment at or below 0°C. The period of storage in an environment at or below 0°C is not particularly limited, but is preferably not less than 1 day (not less than 24 hours) or not less than 2 days (not less than 48 hours). The period of storage in an environment at or below 0°C may be set to, for example, not less than 5 days or not less than 10 days, or may be set to a longer period, such as from 15 days to 3 years, from 1 month to 2 years, or from 3 months to 1 year. When the period of storage of the mixture to be frozen is too short, the mixture is less likely to retain a fresh aroma of a freshly squeezed fruit juice. The method of freezing is not particularly limited, but freezing at or below -4°C is preferred.

In the present invention, the mixture may be stored, for example, in a container such as tank, or may be stored in a barrel made of wood such as oak. When an emphasis is placed on the flavor of a fruit, it is preferable to store the mixture in a tank made of stainless steel or enamel. When an emphasis is placed on the addition of aroma such as wood aroma, it is preferable to store the mixture in a barrel. Further, during storage, it is preferable to store the mixture under light shielding conditions in order to prevent deterioration from light.

In the present invention, insoluble solids may be removed from the mixture before the mixture is frozen or after the frozen mixture is thawed. Removal of insoluble solids may be performed depending on the extent of insoluble solids formed -- for example, if the amount of insoluble solids formed is insignificant, insoluble solids can be removed by a means such as racking, or if the amount of insoluble solids formed is high, insoluble solids can be removed using a solid-liquid separation means. Solid-liquid separation can be performed using solely one of common separation means such as centrifugation, membrane filtration, diatomaceous earth filtration, and filter paper filtration, or using two or more of them in combination. Other solid-liquid separation means may also be performed together as a preliminary filtration means for enhancing working efficiency.

In the present invention, a heating step may or may not be taken. However, it is preferable to produce the fruit juice-containing unrefined liquor without taking a heating step. When a heating step is taken, the heat treatment conditions are not particularly limited -- for example, heating can be done at a temperature of not less than 40°C or not less than 80°C.

### Alcoholic beverage

In one embodiment, the present invention is directed to an alcoholic beverage and a method for producing the same. In this invention, the term "alcoholic beverage" refers to a beverage containing an alcohol (ethanol). The alcohol concentration of the alcoholic beverage is not particularly limited. The alcoholic beverage of this invention may be, for example, a so-called low-alcohol beverage (RTD beverage) with an alcohol content of approximately from 1 to 9 v/v%, or a so-called liqueur with an alcohol content of not less than 15 v/v%, as long as it comprises a fruit juice-containing unrefined liquor as described above. The alcoholic beverage of this invention has an alcohol content of preferably from 0.1 to 50 v/v%, more preferably from 1 to 30 v/v%, still more preferably from 3 to 15 v/v%.

The alcoholic beverage of the present invention is characterized by comprising a fruit juice-containing unrefined liquor as described above. The fruit juice-containing unrefined liquor contains a fruit juice and thus has a rich aroma derived from the fruit juice. Therefore, when added to an alcoholic beverage, the fruit juice-containing unrefined liquor can add the rich aroma of the fruit juice to the alcoholic beverage, and can be used as an alternative to the whole or a part of a fruit juice. Also, by adding the fruit juice-containing unrefined liquor to an alcoholic beverage, the quality stability during long-term storage of the alcoholic beverage can be improved as compared to an alcoholic beverage simply mixed with a fruit juice. To be specific, when the fruit juice-containing unrefined liquor of this invention is added to produce an alcoholic beverage with a fruit juice content comparable to that of an alcoholic beverage simply mixed with a fruit juice, the alcoholic beverage comprising the fruit juice-containing unrefined liquor can retain a rich quality of aroma derived from a citrus fruit for a longer period of time. Further, since the fruit juice-containing unrefined liquor of this invention is produced by storing it once in an environment at or below 0°C to thereby stabilize aroma components, the final alcoholic beverage produced by adding the fruit juice-containing unrefined liquor can retain a stable aroma for a long period of time after production.

Therefore, when a packaged alcoholic beverage, which is more likely to be subjected to long-term storage, is produced from the fruit juice-containing unrefined liquor of the present invention, the effects of this invention can be fully utilized. The form and materials of a package are not limited in any way -- various packages made of a resin, a paper, glass, or wood can be advantageously used. Examples of packages include, but are not limited to, plastic-based molded packages, metal cans, laminated paper packages with a metal foil or plastic film laminated thereon, and glass bottles. In a preferred embodiment, the alcoholic beverage of this invention can be packed in a resin package, a laminated paper package, or a glass package.

In the present invention, depending on the desired design quality, an alcoholic beverage is prepared by adding an appropriate amount of the fruit juice-containing refined liquor, and the prepared alcoholic beverage is packed in a package, whereby a packaged alcoholic beverage is produced.

The types of other source materials, besides the aforementioned fruit juice-containing refined liquor, to be added to the alcoholic beverage of the present invention are not particularly limited. Like in the case of common alcoholic beverages, a fruit juice, an alcohol, a sugar, an acidulant, and/or other additives may be added to the alcoholic beverage of this invention. Examples of the additives that can be added include, but are not limited to, flavorings, vitamins, pigments, antioxidants, emulsifiers, preservatives, seasonings, essences, pH adjustors, and quality stabilizers.

Further, a carbonated beverage may be made by adding carbon dioxide gas to the alcoholic beverage of the present invention.

Furthermore, from another point of view, it can be understood that the present invention is directed to a method for enhancing the keeping quality of an alcoholic beverage. In other words, since this invention can prevent deterioration of the aroma of a fruit juice-containing alcoholic beverage during long-term storage, it can be understood that this invention is directed to a method for preventing sedimentation in a fruit juice-containing alcoholic beverage, and a method for preventing deterioration of the aroma of a fruit juice-containing alcoholic beverage.

### EXAMPLES

Hereunder, the present invention will be described in more detail by way of specific examples, but this invention is not limited to the specific examples given below. Unless otherwise stated herein, all concentrations and other like parameters are expressed on a weight basis, and all numerical ranges are inclusive of their endpoints.

### Experiment 1

Lemon juice was extracted from fresh lemon fruits using an inline juice extractor (Fresh'n Squeeze, produced by FMC Food Tech Inc.). After about 60 minutes of squeezing, the obtained fresh lemon juice was mixed with neutral spirits with an alcohol content of 95 v/v% (continuously distilled alcohol) and pure water, and stirred to be homogeneous (alcohol content of mixed liquids: 5 to 60 v/v%). Then, the mixed liquids were centrifuged to remove insoluble solids, and stored in an environment at -18°C for 48 hours, whereby different fruit juice-containing unrefined liquor samples were produced.

The fruit juice-containing unrefined liquor samples produced in the aforementioned manner were thawed at room temperature, and adjusted to an alcohol content of 20 v/v% with addition of neutral spirits with an alcohol content of 95 v/v% (continuously distilled alcohol) and pure water, whereby different packaged alcoholic beverage samples were prepared.

Next, the prepared alcoholic beverage samples were drunk at room temperature and subjected to sensory evaluation for aroma. The sensory evaluation was performed by four trained professional panelists according to a five-point scale based on the criteria detailed below. The averages of the ratings given by the panelists for aroma and taste are shown in the table given below.
■ Aroma (fresh aroma of citrus fruit juice)
   - 5 points: A fresh aroma of citrus fruit juice is strongly perceived.
   - 4 points: A fresh aroma of citrus fruit juice is somewhat strongly perceived.
   - 3 points: A fresh aroma of citrus fruit juice is perceived.
   - 2 points: A fresh aroma of citrus fruit juice is slightly perceived.
   - 1 point: No fresh aroma of citrus fruit juice is perceived.
■ Taste (natural taste of citrus fruit juice)
   - 5 points: A natural taste of citrus fruit juice is strongly perceived.
   - 4 points: A natural taste of citrus fruit juice is somewhat strongly perceived.
   - 3 points: A natural taste of citrus fruit juice is perceived.
   - 2 points: A natural taste of citrus fruit juice is slightly perceived.
   - 1 point: No natural taste of citrus fruit juice is perceived.

The results of the sensory evaluation are shown in the table given below. It was found that according to the present invention, fruit juice-containing unrefined liquors were obtained which made one fully perceive a fresh aroma of a citrus fruit juice.

### [Table 1]

**Table 1.**

| Sample | 1-1 | 1-2 | 1-3 | 1-4 | 1-5 | 1-6 |
|---|---|---|---|---|---|---|
| Alcohol concentration of fruit juice-containing refined liquor | 5 v/v% | 10 v/v% | 15 v/v% | 30 v/v% | 50 v/v% | 60 v/v% |
| Fruit juice concentration of fruit juice-containing refined liquor | 40% | 40% | 40% | 40% | 40% | 40% |
| Aroma | 2.3 | 3.2 | 3.3 | 3.7 | 2.8 | 2.8 |
| Taste | 2.9 | 3.5 | 4.1 | 3.6 | 4.3 | 1.6 |
| Comment | • The top note of lemon is faint. | • The top note of lemon is perceivable but faint. | • A fresh lemon aroma is strongly perceived. | • A fresh lemon aroma is strongly perceived. | • A sharp, fresh lemon aroma is perceived. | • The aroma and flavor of alcohol are prominent. |
| | • The aroma of alcohol is prominent. | | | | | |
| | | | • It has a pronounced flavor with a fruit pulp sensation and a complex taste. | • It has a pronounced sour taste and a lemon flavor. | • The spiciness of alcohol is perceived. | • It has a feeble flavor. |
| | | • A somewhat potato-like aroma is perceived. | | | | |

### Experiment 2

An experiment was performed to confirm the effects of storage temperatures on citrus fruit juice-containing unrefined liquors. A fruit juice-containing unrefined liquor (alcohol content: 15 v/v%) produced by the same procedure as in Experiment 1 was stored at varied temperatures of -18°C (frozen temperature), 5°C (refrigerated temperature), or 23°C (room temperature) for 7 days.

The fruit juice-containing unrefined liquor samples produced in the aforementioned manner were drunk as they were at room temperature and subjected to sensory evaluation for aroma. The sensory evaluation was performed by four trained professional panelists according to a five-point scale based on the same criteria as in Experiment 1.

As is evident from the experiment results shown in the table given below, the fruit juice-containing unrefined liquor sample stored at -18°C showed less deterioration in aroma than those stored at refrigerated or room temperature.

### [Table 2]

**Table 2.**

| Sample | 2-1 (frozen) | 2-2 (refrigerated) | 2-3 (room temp.) |
|---|---|---|---|
| Alcohol concentration of fruit juice-containing refined liquor | 15 v/v% | 15 v/v% | 15 v/v% |
| Fruit juice concentration of fruit juice-containing refined liquor | 50% | 50% | 50% |
| Storage temperature | -18°C | 5°C | 23°C |
| Aroma | 5.0 | 3.5 | 2.0 |
| Taste | 5.0 | 3.3 | 1.5 |
| Comment | • A fresh lemon aroma is strongly perceived. | • The aroma of lemon is faint and flat. | • It tastes thin and has no characteristics of lemon. |
| | • It has a pronounced flavor with a fruit pulp sensation and a complex taste. | • The natural flavor of lemon is faint, so that the taste of alcohol is perceived. | |
| | | | • The aroma of deteriorated lemon, and the aroma of heattreated lemon are perceived. |

### Experiment 3

An experiment was performed to confirm the effects of time intervals between squeezing of a citrus fruit juice and mixing with an alcohol. Different fruit juice-containing unrefined liquor samples (alcohol content: 18 v/v%) were produced by the same procedure as in Experiment 1 except that the time interval between squeezing and mixing with an alcohol was set to 24, 48 or 72 hours.

The fruit juice-containing unrefined liquor samples produced in the aforementioned manner were thawed at room temperature and diluted 4-fold with pure water, whereby different packaged alcoholic beverage samples (alcohol content: 4.5 v/v%) were prepared.

Next, the prepared alcoholic beverage samples were drunk at room temperature and subjected to sensory evaluation for aroma. The sensory evaluation was performed by four trained professional panelists according to a five-point scale based on the same criteria as in Experiment 1.

As is evident from the results shown in the table given below, fruit juice-containing unrefined liquor samples with high levels of taste and aroma were obtained by mixing a fruit juice with an alcohol in a short time after squeezing of the fruit juice.

### [Table 3]

**Table 3.**

| Sample | 3-1 | 3-2 | 3-3 Com. Ex. | 3-4 Com. Ex. |
|---|---|---|---|---|
| Alcohol concentration of fruit juice-containing refined liquor | 18 v/v% | 18 v/v% | 18 v/v% | 18 v/v% |
| Fruit juice concentration of fruit juice-containing refined liquor | 80% | 80% | 80% | 80% |
| Time interval between squeezing and mixing | 0h | 24h | 48h | 72h |
| Aroma | 5.0 | 4.0 | 2.3 | 1.5 |
| Taste | 5.0 | 4.0 | 2.0 | 1.5 |
| Comment | • An aroma reminiscent of the sourness of fresh lemon is perceived. | • A juicy lemon aroma is perceived. | • A fresh lemon aroma is lost. | • A moldy aroma different from lemon is perceived. |
| | | | • A dull and potato-like aroma is perceived. | |
| | | • A lemon juice sensation is somewhat faint. | | |
| | | | | • A dull and potato-like aroma is perceived. |
| | • A fruit juice sensation and a juicy aroma are perceived. | | • The characteristics of lemon flavor are faint. | |
| | | | | • No lemon flavor is perceived. |

## Claims

1. A method for producing a fruit juice-containing unrefined liquor, the method comprising the steps of:
mixing a fruit juice obtained from a citrus fruit using a juice extractor with an alcohol within 30 hours after squeezing, to obtain a mixed liquor with an alcohol content of from 15 to 55 v/v%;
storing the mixed liquid in an environment at or below 0°C.

2. The method according to claim 1, wherein the fruit juice is mixed with an alcohol with an alcohol content of not less than 59 v/v%.

3. The method according to claim 1 or 2, wherein the mixed liquid is stored in an environment at or below 0°C for a period of not less than 24 hours.

4. The method according to any of claims 1 to 3, wherein the citrus fruit comprises at least one selected from the group consisting of lemon, grapefruit, orange, and lime.

5. The method according to any of claims 1 to 4, wherein the fruit juice-containing unrefined liquor is produced without taking a heating step.

6. The method according to any of claims 1 to 5, wherein the fruit juice-containing unrefined liquor has a fruit juice content of not less than 35% in terms of straight fruit juice.

7. A fruit juice-containing unrefined liquor obtained by the method according to any of claims 1 to 6.

8. A method for producing a food or beverage, the method comprising adding a fruit juice-containing unrefined liquor obtained by the method according to any of claims 1 to 6 to the food or beverage.

9. A food or beverage having added thereto a fruit juice-containing unrefined liquor obtained by the method according to any of claims 1 to 6.

10. A method for enhancing the aroma of a food or beverage, the method comprising adding a fruit juice-containing unrefined liquor obtained by the method according to any of claims 1 to 6 to the food or beverage.
